# FASCICULE DE BREVET EUROPEEN

(11) **EP 0 703 007 B1**
(45) Date de publication et mention de la délivrance du brevet: **25.11.1998**
(21) Numéro de dépôt: 95410087.1
(22) Date de dépôt: 10.08.1995
(51) Int. Cl.: B05B 5/10, H02M 3/28, H02M 7/10, H02M 3/337

(54) **Procédé et dispositif d'élaboration de haute tension, notamment pour l'application électrostatique de produit de revêtement**
Verfahren und Vorrichtung zur Hochspannungserzeugung, insbesondere zur elektrostatischen Beschichtung
Method and device for high voltage generation, in particular for electrostatic application of coating material

(30) Priorité: 16.09.1994 FR 9411340; 21.12.1994 FR 9415669
(43) Date de publication de la demande: 27.03.1996
(73) Titulaire: SAMES S.A., F-38243 Meylan Cédex (FR)
(72) Inventeur: Burtin, Jean Pierre, F-38120 Saint Egrève (FR); Dobrowolski, Flavien, F-38650 Sinard (FR); Thome, Caryl, F-38120 Saint Egrève (FR)
(74) Mandataire: Myon, Gérard Jean-Pierre

(56) Documents cités:
- EP-A- 0 589 202
- GB-A- 2 183 941

## Description

L'invention concerne un procédé et dispositif d'élaboration de haute tension, notamment pour l'application électrostatique de produit de revêtement, en particulier dans une installation de projection d'un tel produit liquide ou pulvérulent.

Dans de telles installations, qui peuvent être manuelles ou automatiques, une ou plusieurs électrodes portées à la haute tension doivent être alimentées électriquement pour créer un champ électrostatique entre le pulvérisateur et l'objet à revêtir. La tension fournie à une électrode est de l'ordre de plusieurs dizaines de kilovolts. Pour alimenter une électrode à partir du secteur ou de toute autre source de tension classique telle qu'une batterie d'accumulateurs, il est donc nécessaire d'augmenter sensiblement la tension disponible. Le courant est généralement limité à quelques milliampères pour raison de sécurité et pour limiter la puissance électrique consommée par l'électrode, cette puissance devant être partiellement dissipée sous forme de chaleur dans le dispositif.

Dans les installations connues de revêtement par voie électrostatique le pulvérisateur est mobile et situé en un lieu généralement peu accessible et de faible volume, dans le cas d'une installation automatique, ou bien porté à bout de bras par un opérateur dans le cas d'une installation manuelle. Il est donc important que ce pulvérisateur soit léger et de faible encombrement. Pour augmenter la manoeuvrabilité du pulvérisateur, l'électrode est le plus souvent alimentée par deux sous-systèmes, l'un situé à poste fixe à proximité de l'installation et habituellement dénommé "unité basse tension", l'autre situé au contact du pulvérisateur et qui sera ici dénommé "redresseur-élévateur de tension" dans lequel la tension est multipliée, par exemple par une cascade de diodes, jusqu'à atteindre plusieurs dizaines de kilovolts. Les deux unités peuvent être connectées entre elles par un toron de câbles conducteurs.

Or, au cours de la durée de vie d'un ensemble formé par une unité basse tension et un redresseur-élévateur, il est parfois nécessaire de procéder à l'échange standard de l'un de ces deux sous-ensembles. Il est alors nécessaire que l'opérateur vérifie la compatibilité de ceux-ci, ce qui nécessite des manipulations électroniques complexes, sous réserve de détruire l'un ou l'autre de ces sous-ensembles par exemple par échauffement en cas de fonctionnement inapproprié. Un fonctionnement inadapté de l'unité basse tension par rapport au redresseur-élévateur peut aussi être dangereux pour l'opérateur.

L'invention résout ce problème.

Elle concerne un procédé d'élaboration d'une haute tension, notamment pour l'application électrostatique de produit de revêtement, du type comprenant l'application à l'entrée d'un redresseur-élévateur de tension d'un signal périodique fourni par une unité basse tension, caractérisé en ce qu'il comprend une étape d'identification du type dudit redresseur réalisée par un calculateur.

Grâce à cette étape d'identification, l'unité basse tension fonctionne d'une manière adaptée au redresseur-élévateur qu'elle alimente. Cette étape est mise en oeuvre à chaque démarrage, ce qui permet de garantir l'adéquation du fonctionnement de l'unité basse tension par rapport au redresseur-élévateur même après l'échange standard d'un de ces deux sous-ensembles.

L'invention concerne aussi un dispositif générateur de haute tension permettant de mettre en oeuvre le procédé, à savoir un dispositif générateur de haute tension, notamment pour alimenter un projecteur électrostatique d'un produit de revêtement, du type comprenant une unité basse tension dont la sortie est connectée à un redresseur-élévateur de tension auquel elle fournit un signal périodique caractérisé en ce que l'unité basse tension est apte à fonctionner avec des redresseurs-élévateurs de plusieurs types et en ce qu'il comporte des moyens d'identification du type du redresseur-élévateur.

Le dispositif permet en outre d'éviter tout fonctionnement dangereux de l'unité basse tension en prévoyant des moyens d'inhibition de l'unité basse tension lorsqu'ils détectent un redresseur-élévateur d'un type inapproprié, c'est-à-dire inapte à fonctionner avec l'unité basse tension.

Dans les systèmes connus de l'art antérieur, le signal électrique circulant dans le toron de câbles est périodique et, afin d'obtenir une tension de sortie maximale, on s'efforce de lui donner une fréquence proche de la fréquence de résonance du redresseur-élévateur de tension. Cette fréquence d'accord varie d'un type de redresseur-élévateur à l'autre et d'un redresseur à l'autre en fonction des tolérances de fabrication des composants. Elle est aussi susceptible de varier en fonction du point de fonctionnement (courant, tension) du redresseur-élévateur ou de l'échauffement des composants en cours d'utilisation.

La fréquence d'accord peut être calculée en fonction du schéma électrique du redresseur-élévateur de tension ou déterminée en cours de fonctionnement par mesure de la tension en aval du transformateur d'entrée du redresseur-élévateur, ce qui permet de tenir compte des variations de cette fréquence de résonance d'un redresseur-élévateur à l'autre et au cours du temps pour un même redresseur. La tension maximale de sortie détermine le point de fonctionnement du dispositif. De tels systèmes sont connus par exemple de FR-A-2 618 618 ou de US 5,159,544.

La variation de la fréquence du signal périodique au cours du temps pour la recherche de l'accord doit être effectuée à partir d'une valeur de départ arbitraire. A chaque mise sous tension, la fréquence ne sera effectivement adaptée au redresseur-élévateur qu'après un intervalle de temps relativement long.

Une variante particulièrement avantageuse de l'invention permet de diminuer cet intervalle de temps. Elle consiste en un procédé conforme à l'invention caractérisé en ce qu'il consiste à faire varier continûment la fréquence de pilotage de l'unité basse tension à partir d'une valeur déterminée par l'étape d'identification.

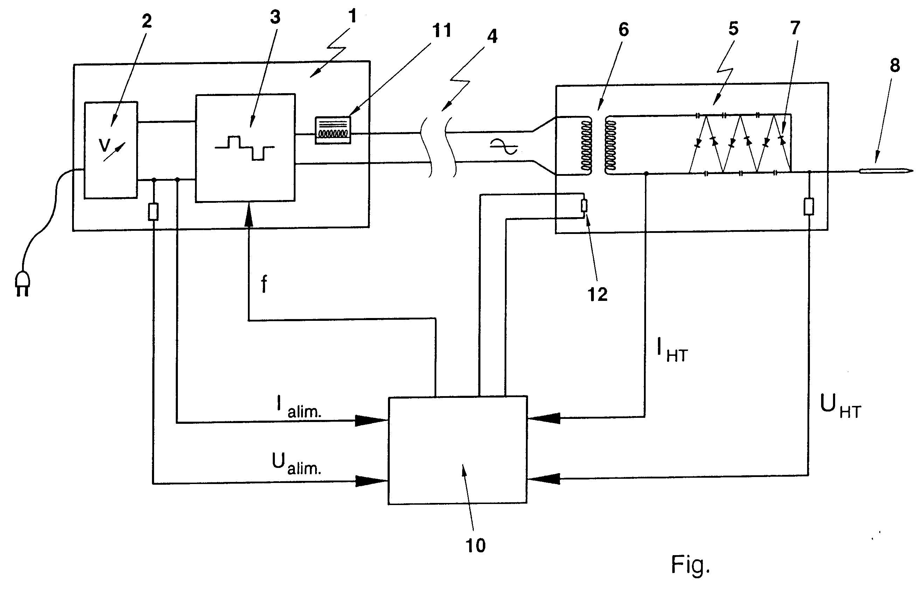

L'invention sera mieux comprise et d'autres avantages de celle-ci apparaîtront plus clairement à la lumière de la description qui va suivre d'un mode de réalisation d'un dispositif d'élaboration de la haute tension pour une installation de projection de produit de revêtement par voie électrostatique conforme à son principe donnée uniquement à titre d'exemple et faite en référence à la figure unique annexée

Dans le circuit de la figure, une unité basse tension 1 est essentiellement constituée par une alimentation stabilisée 1 connectée au secteur et délivrant un courant continu et une tension continue ajustable à un générateur 3 de courant électrique périodique de fréquence f pilotable en fréquence. L'alimentation stabilisée 2 pourrait aussi avoir pour source de courant une batterie d'accumulateurs ou toute autre source de courant. Le signal électrique périodique généré par l'unité basse tension 1 est un signal carré de forme constante minimisant les harmoniques de premier rang, c'est-à-dire une onde la plus proche possible d'une sinusoïde parfaite. Un filtre 11 permet de lisser partiellement ce signal. L'amplitude de cette onde est variable en fonction de la tension d'alimentation du générateur 3 par l'alimentation stabilisée 1. Bien que la forme du signal évoquée ci-dessus soit particulièrement avantageuse et simple à mettre en oeuvre, tout autre signal périodique permettrait de mettre en oeuvre l'invention, en particulier un signal sinusoïdal.

Le signal périodique issu de l'unité basse tension 1 est appliqué à travers un toron 4 de câbles conducteurs souples à l'entrée d'un redresseur-élévateur de tension 5 comprenant un transformateur d'entrée 6 et un multiplicateur de tension 7. La sortie du multiplicateur de tension 7 est connectée à une électrode de charge 8 d'un projecteur électrostatique de produit de revêtement non représenté.

L'opérateur peut choisir de faire varier la tension délivrée à l'électrode en fonction des caractéristiques de projection souhaitées ou en fonction de la forme des objets à revêtir. Le courant varie aussi en fonction des effluves de haute tension au niveau de l'électrode qui dépendent de son environnement, par exemple de la distance de la masse la plus proche. La température des composants influe aussi sur leurs caractéristiques et donc sur la fréquence du signal périodique permettant d'obtenir une tension donnée. Pour toutes ces raisons, la fréquence f du signal périodique délivrée par le générateur 3 est pilotée par un calculateur 10.

Conformément à l'invention, il est possible de faire fonctionner une unité basse tension unique avec des redresseurs-élévateurs de types différents. En effet, une résistance 12 est insérée dans tous les redresseurs-élévateurs. Chaque type de redresseur-élévateur correspond à une valeur de résistance 12. La résistance 12 est connectée au calculateur 10 qui détermine sa valeur par exemple par mesure classique de chute de tension.

Une étape d'identification, dans laquelle la valeur de la résistance 12 est mesurée, permet au calculateur 10 d'identifier le type du redresseur-élévateur. De manière avantageuse, cette étape d'identification a lieu lors de chaque démarrage de l'unité basse tension, c'est-à-dire soit lors la mise sous tension de l'unité basse tension, soit lors de son activation à partir de la gâchette d'un pistolet dans une installation manuelle ou de l'automate dans une installation automatique.

Cette étape d'identification permet en particulier de fixer le point de départ du processus d'incrémentation sur la valeur théorique de la fréquence permettant un rendement optimal. En effet, la valeur de la résistance permet de donner immédiatement au générateur 3, par référence à des données stockées en mémoire, une valeur de consigne de fréquence f proche de la valeur optimale. Le processus de recherche de la fréquence d'accord a lieu ainsi sur une plage de fréquence réduite. La fréquence d'accord est atteinte plus rapidement à chaque mise en route du dispositif, et en particulier lors du branchement du redresseur-élévateur 5 sur l'unité basse tension 1.

L'étape d'identification permet aussi au calculateur de déterminer, à partir d'une table stockée en mémoire, d'une part les paramètres de fonctionnement du redresseur-élévateur tels que sa tension maximum de sortie, son courant maximum de sortie et d'autre part son mode de fonctionnement, en particulier la nécessité ou non d'utiliser des fonctions optionnelles telles que le pilotage d'une électrovanne d'alimentation en produit de revêtement.

Une valeur de résistance spécifique est allouée à chaque type de redresseur-élévateur, par exemple 10 kΩ pour un premier type et 100 kΩ pour un second type. La grande disponibilité des composants sur le marché et la tolérance étroite généralement admise sur leur valeur permettent de prévoir l'identification d'un très grand nombre de types de redresseurs-élévateurs différents.

Cette identification peut aussi servir pour des raisons de sécurité ou de vérification de compatibilité entre des appareils: des moyens d'inhibition non représentés empêchent le fonctionnement de l'unité base tension lorsqu'ils détectent un redresseur-élévateur d'un type inapproprié, c' est-à-dire inapte à fonctionner avec l'unité basse tension.

Lorsque l'unité basse tension 1 est en service, l'étape d'identification du redresseur-élévateur 5 a lieu lors de chaque activation de l'unité basse tension, ce qui accroît encore la sécurité. En effet, même si le redresseur-élévateur est échangé alors que l'unité basse tension est en sous tension, l'identification a lieu dès que l'opérateur exerce une pression sur la gâchette dans une installation manuelle ou dès que l'automate réactive l'unité basse tension dans une installation automatique. Il est ainsi pratiquement impossible de faire fonctionner l'unité basse tension dans un mode non adapté au redresseur-élévateur auquel elle est connectée. Si le redresseur élévateur est du même type que celui précédemment identifié, la fréquence du signal de périodique peut être maintenue égale à celle déterminée lors du processus de recherche de l'accord précédent, ce qui permet d'utiliser le redresseur-élévateur dans les conditions optimales quasi immédiatement.

La mesure de la valeur de la résistance 12 pourrait aussi être effectuée par une boucle de réaction à partir du générateur 3. Une inductance pourrait être montée à la place de la résistance 12 et remplir la même fonction.

Le calculateur 10 détermine le rendement du dispositif générateur de haute tension constitué par l'unité basse tension 1 et le redresseur-élévateur 5 comme étant le rapport de la puissance en sortie du redresseur 5 sur la puissance d'entrée de l'unité basse tension 1. Plus précisément, ces puissances sont calculées à partir des valeurs de la tension (U_{HT}) et du courant (I_{HT}) dans le redresseur-élévateur 5 d'une part et de la tension (Uₐₗᵢₘ) et du courant (Iₐₗᵢₘ) d'alimentation de l'unité basse tension 1 d'autre part. On procède par incrément en faisant varier la fréquence de consigne délivrée par le calculateur 10 au générateur 3 et en maintenant le sens de l'incrément aussi longtemps que le rapport croît et en inversant le sens de l'incrément dès que ce rapport décroît.

Ainsi, à tension de sortie donnée par la consigne de l'opérateur, par exemple 80 kV, le courant basse tension est minimal, ce qui permet d'éviter une dissipation thermique dangereuse et des pertes fer/diélectrique importantes. A puissance de sortie du dispositif donnée, la puissance d'entrée est minimale. La consommation électrique du dispositif est ainsi minimale, ce qui présente un avantage économique non négligeable. En effet, certaines installations industrielles compte un grand nombre de projecteurs de produits de revêtement et, par voie de conséquence, de dispositifs générateurs de haute tension associés. De plus, il devient courant d'alimenter certains dispositifs générateurs de haute tension à partir de batteries d'accumulateurs, ce qui, dans le cas de projecteurs manuels améliore la maniabilité de l'appareil. La taille de ces batteries étant limitée, la maîtrise de la puissance consommée permet d'augmenter l'autonomie du projecteur.

Comme les valeurs de tension et de courant mesurées sont continues, le calculateur détermine la puissance par simple multiplication. Les incréments de fréquence peuvent être appliqués toutes les 200 millisecondes. L'invention est aussi applicable dans le cas où les grandeurs mesurées sont périodiques: le calculateur 10 fonctionne alors, comme cela est connu de l'homme du métier, en intégrant la différence de phase entre les tensions et les courants. Cependant, ceci nécessite un travail de programmation plus important et un calculateur plus puissant.

L'invention a été représentée avec l'unité basse tension 1 séparée du redresseur-élévateur 5 et reliée à celui-ci par un toron 4 de câbles souples mais elle s'applique aussi au cas où ces sous-ensembles font partie d'un système intégré ou compact.

## Revendications

1. Procédé d'élaboration d'une haute tension, notamment pour l'application électrostatique de produit de revêtement, du type comprenant l'application à l'entrée d'un redresseur-élévateur de tension (5) d'un signal périodique fourni par une unité basse tension (1), caractérisé en ce qu'il comprend une étape d'ldentification du type dudit redresseur-élévateur réalisée par un calculateur (10).

2. Procédé selon la revendication 1, caractérise en ce que ladite étape d'identification est mise en oeuvre lors de chaque démarrage de ladite unité basse tension.

3. Procédé selon la revendication 1, caractérisé en ce qu'il consiste à faire varier continûment la fréquence (f) de pilotage de ladite unité basse tension (1) à partir d'une valeur déterminée par ladite étape d'identification.

4. Procédé selon la revendication 3, caractérisé en ce qu'il consiste à faire varier ladite fréquence (f) par incrément, à maintenir le sens de l'incrément aussi longtemps que le rapport de la puissance électrique en sortie dudit redresseur-élévateur sur la puissance électrique d'entrée de ladite unité basse tension croît et à inverser le sens de l'incrément dès que ledit rapport décroît.

5. Procédé selon l'une des revendications précédentes, caractérisé en ce que ladite étape d'identification comprend la détermination des paramètres et/ou du mode de fonctionnement dudit redresseur-élévateur.

6. Dispositif générateur de haute tension, notamment pour alimenter un projecteur électrostatique d'un produit de revêtement, du type comprenant une unité basse tension (1) dont la sortie est connectée à un redresseur-élévateur de tension (5) auquel elle fournit un signal périodique caractérisé en ce que ladite unité basse tension est apte à fonctionner avec des redresseurs-élévateurs de plusieurs types et en ce qu'il comporte des moyens (10,12) d'identification du type dudit redresseur-élévateur.

7. Dispositif selon la revendication 6, caractérisé en ce que lesdits moyens d'identification (10,12) déterminent la fréquence initiale dudit signal périodique lors de la mise en service du dispositif.

8. Dispositif selon la revendication 6 ou 7 caractérisé en ce que lesdits moyens incluent une résistance (12).

9. Dispositif selon l'une des revendications 6 à 8 caractérisé en ce qu'il comporte des moyens d'inhibition de ladite unité basse tension lorsque lesdits moyens d'identification détectent un redresseur-élévateur d'un type inapproprié.

10. Dispositif selon l'une des revendications 6 à 8 caractérisé en ce qu'il comporte des moyens (10) de pilotage en fréquence (f) dudit signal périodique en fonction du rapport de la puissance électrique en sortie dudit redresseur-élévateur sur la puissance d'entrée de ladite unité basse tension.

## Claims

1. Method of generating a high voltage, in particular for the electrostatic application of a coating material, of the type comprising the application to the input of a voltage step-up rectifier (5) of a periodic signal supplied by a low-voltage unit (1), characterized in that it comprises a step of identification of the type of the said step-up rectifier, carried out by a computer (10).

2. Method according to Claim 1, characterized in that the said identification step is implemented each time the said low-voltage unit is started up.

3. Method according to Claim 1, characterized in that it consists in continuously varying the drive frequency (f) of the said low-voltage unit (1) from a value determined by the said identification step.

4. Method according to Claim 3, characterized in that it consists in varying the said frequency (f) by increment, in maintaining the direction of the increment for as long as the ratio of the electrical power output by the said step-up rectifier to the input electrical power of the said low-voltage unit is increasing and in reversing the direction of the increment as soon as the said ratio decreases.

5. Method according to one of the preceding claims, characterized in that the said identification step comprises the determination of the parameters and/or mode of operation of the said step-up rectifier.

6. Device for generating high voltage, in particular for powering an electrostatic sprayer of a coating material, of the type comprising a low-voltage unit (1) whose output is connected to a voltage step-up rectifier (5) to which it supplies a periodic signal, characterized in that the said low-voltage unit is able to operate with step-up rectifiers of several types and in that it comprises means (10, 12) of identification of the type of the said step-up rectifier.

7. Device according to Claim 6, characterized in that the said identification means (10, 12) determine the initial frequency of the said periodic signal when the device is put into service.

8. Device according to Claim 6 or 7, characterized in that the said means include a resistor (12).

9. Device according to one of Claims 6 to 8, characterized in that it comprises means for disabling the said low-voltage unit when the said identification means detect a step-up rectifier of an inappropriate type.

10. Device according to one of Claims 6 to 8, characterized in that it comprises means (10) for driving the frequency (f) of the said periodic signal as a function of the ratio of the electrical power output by the said step-up rectifier to the input power of the said low-voltage unit.

## Patentansprüche

1. Verfahren zur Erzeugung einer Hochspannung, insbesondere für die elektrostatische Anwendung eines Beschichtungsproduktes, bei dem am Eingang ein Gleichrichter-Spannungserhöher (5) eines periodischen Signals angewandt wird, das durch eine Niederspannungseinheit (1) geliefert wird,
**dadurch gekennzeichnet,**
daß es eine Identifikationsstufe des Typs des Gleichrichter-Spannungserhöhers umfaßt, die durch einen Rechner (10) realisiert wird.

2. Verfahren nach Anspruch 1, dadurch gekennzeichnet, daß die Identifikationsstufe während des Starts der Niederspannungseinheit eingesetzt wird.

3. Verfahren nach Anspruch 1, dadurch gekennzeichnet, daß es darin besteht, kontinuierlih die Steuerfrequenz (f) der Niederspannungseinheit (1) von einem bestimmten Wert an durch die Identifikationsstufe zu variieren.

4. Verfahren nach Anspruch 3, dadurch gekennzeichnet, daß es darin besteht, die genannte Frequenz (f) inkremental zu variieren, die Richtung des Inkrements solange aufrechtzuerhalten, wie das Verhältnis der elektrischen Ausgangsleistung des Gleichrichter-Spannungserhöhers zu der elektrischen Eingangsleistung der Niederspannungseinheit steigt und die Richtung des Inkrements umzukehren, sobald das Verhältnis abnimmt.

5. Verfahren nach einem der vorhergehenden Ansprüche, dadurch gekennzeichnet, daß die Identifikationsstufe die Bestimmung der Parameter und/oder die Funktionsweise des Gleichrichter-Spannungserhöhers umfaßt.

6. Vorrichtung zur Erzeugung einer Hochspannung, insbesondere um einen elektrostatischen Projektor eines Beschichtungsproduktes zu versorgen, die eine Niederspannungseinheit (1) aufweist, deren Ausgang mit einem Gleichrichter-Spannungserhöher (5) verbunden ist, dem sie ein periodisches Signal liefert,
**dadurch gekennzeichnet,**
daß die Niederspannungseinheit dazu geeignet ist, mit Gleichrichter-Spannungserhöhern unterschiedlicher Typen zu arbeiten und daß sie Mittel zur Identifikation des Typs des Gleichrichter-Spannungserhöhers umfaßt.

7. Vorrichtung nach Anspruch 6, dadurch gekennzeichnet, daß die Mittel zur Identifikation (10,12) die Anfangsfrequenz des periodischen Signals während der Inbetriebnahme der Vorrichtung bestimmt.

8. Vorrichtung nach Anspruch 6 oder Anspruch 7, dadurch gekennzeichnet, daß die Mittel einen Widerstand (12) einschließen.

9. Vorrichtung nach einem der Ansprüche 6 bis 8, dadurch gekennzeichnet, daß sie Mittel zum Sperren der Niederspannungseinheit aufweist, wenn die Mittel zur Identifikation einen Gleichrichter-Spannungserhöher eines nicht geeigneten Tps erfassen.

10. Vorrichtung nach einem der Ansprüche 6 bis 8, dadurch gekennzeichnet, daß sie Mittel (10) zum Steuern der Frequenz (f) des periodischen Signals in Abhängigkeit vom Verhältnis der elektrischen Ausgangsleistung des Gleichrichter-Spannungserhöhers zu der Eingangsleistung der Niederspannungseinheit umfaßt.
